# EUROPEAN PATENT SPECIFICATION

(11) **EP 1 593 546 B1**
(45) Date of publication and mention of the grant of the patent: **20.02.2008**
(21) Application number: 05017516.5
(22) Date of filing: 13.03.2003
(51) Int. Cl.: B60N 2/30

(54) **Drop down stow in floor automotive vehicle set assembly**
Herunterklappbare, im Boden verstaubare Kraftfahrzeugsitzanordnung
Dispositif d'arrimage rabattable pour ensemble siège de véhicule automobile

(30) Priority: 14.03.2002 US 365043 P
(43) Date of publication of application: 09.11.2005
(62) Divisional of application: 03726059.3
(73) Proprietor: Intier Automotive Inc., Troy MI 48074 (US)
(72) Inventor: Holdampf, Carl, Farmington Hills Michigan 48335 (US)
(74) Representative: Hössle Kudlek & Partner

(56) References cited:
- FR-A- 570 858
- US-A- 1 887 947
- US-A- 5 195 795
- US-A- 5 570 931

## Description

### BACKGROUND OF THE INVENTION

### Field of the Invention

The invention relates to a seat assembly for an automotive vehicle. More particularly, the invention relates to a riser mechanism for allowing movement of the seat assembly between a seating position and a stowed position.

### Description of the Prior Art

Automotive vehicles include seat assemblies for supporting occupants within the vehicle. Seat assemblies include a seat cushion and a seat back operatively coupled to the seat cushion by a recliner mechanism for allowing selective pivotal adjustment of the seat back relative to the seat cushion between a plurality of reclined seating positions. Typically, the seat back is also movable between any one of the reclined seating positions and a generally horizontal, forwardly stowed position to present a load floor surface on the back of the seat back.

It is known in the automotive seating art to mount a four bar linkage between the seat cushion and the floor of the vehicle for moving the seat assembly between a seating position with the seat cushion spaced above the floor of the vehicle and a forwardly stowed position with the seat cushion disposed generally forward of the seating position and lying against the floor of the vehicle. The four bar linkage, as currently practiced in the seating art, requires additional packaging space forward of the seat assembly. It also remains desirable to have the seat assembly fold to the stowed position such that the load floor surface is generally planar with the cargo floor behind the seat assembly, or alternatively, with a load floor surface of a rear seat assembly similarly positioned.

US 5 195 795 A relates to a storable vehicle seat assembly which is retractable below the level of the vehicle's floor. A riser mechanism is shown comprising a rotatable forward leg member pivotally attached at one end to a lower seat member and at a second end to storage means and a rotatable rearward leg member pivotally attached at one end to an upper seat member and at a second end to the vehicle's floor, within a channel.

FR 29 035 E considered as the closest prior art to claim 1 shows a seat assembly for supporting an occupant above a floor, said seat assembly comprising a seat cushion extending between a seating surface and a bottom surface; a riser mechanism extending between said bottom surface of said seat cushion and the vehicle's floor for allowing selective movement of said seat assembly between a seating position and a stowed position, said riser mechanism including a first link extending between an upper first end slidably coupled to said seat cushion and a lower first end pivotally coupled to the floor and a second link extending between an upper second end pivotally coupled to said seat cushion and a lower second end slidably coupled to the floor.

Another seat assembly with a seating position above the floor and a stowed position within a recess in the floor is known from US 1 887 947 A. In both positions a panel attached to the assembly conceals said recess in the floor.

### SUMMARY OF THE INVENTION

According to the invention, a seat assembly comprising the features of claim 1 is disclosed.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a side view of a seat assembly according to one embodiment of the invention;
Figure 2 is a perspective view of the seat assembly in a seating position;
Figure 3 is a perspective view of the seat assembly in a stowed position;
Figure 4 is a perspective view of the seat assembly interconnected to the vehicle floor while in the seating position;
Figure 5 is a side view of a second seat assembly which is not claimed;
Figure 6 is a partial, perspective view of the seat assembly according to Figure 5 shown in the seating position;
Figure 7 is a partial, perspective view of the seat assembly according to Figure 5 shown in the seating position;
Figure 8 is a partial, perspective view of the seat assembly according to Figure 5 shown in the seating position; and
Figure 9 is a partial view of the seat assembly according to Figure 5 shown in the stowed position.

### DETAILED DESCRIPTION OF THE PREFERRED EMBODIMENT

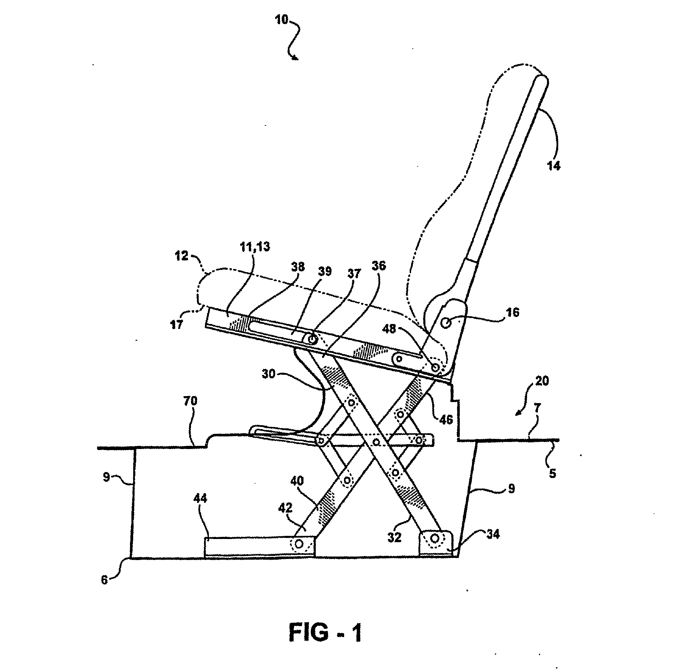

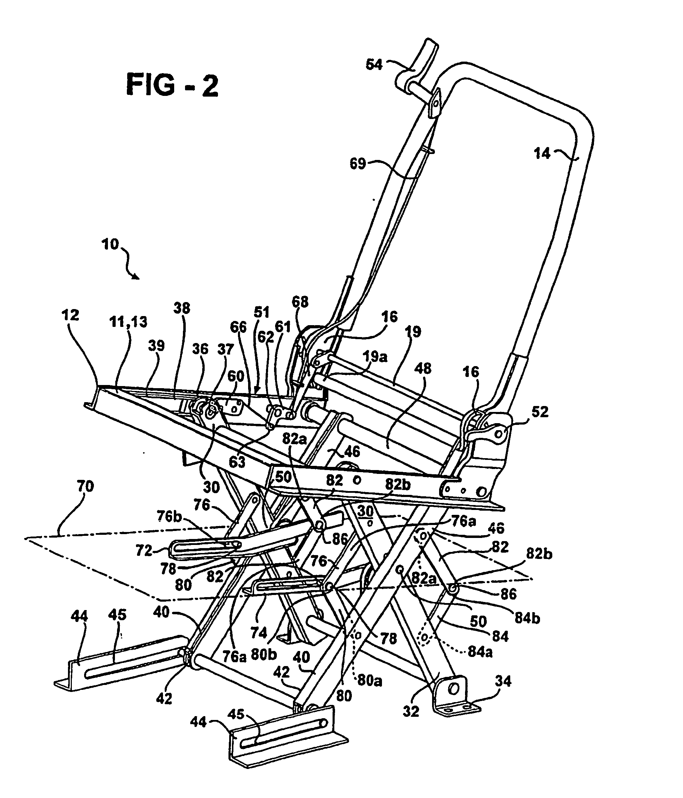

Referring to Figures 1 through 4, a seat assembly for an automotive vehicle is generally indicated at 10. The seat assembly 10 includes a seat cushion 12 having a seating surface 15 for supporting an occupant of the seat assembly 10 above a floor 5 in the vehicle and an opposite bottom surface 17. The floor 5 includes a recess 6 disposed below a load floor 7. An intermediate structure 9 extends between the load floor 7 and the recess 6.

The seat cushion 12 extends between generally parallel and spaced apart side members 11,13. A seat back 14 for supporting the back of the occupant is operatively coupled to the seat cushion 12 by a recliner mechanism 16 of any suitable type known to those skilled in the art. The recliner mechanism 16 can be actuated to a locked state or an unlocked state. In the unlocked state, the recliner mechanism 16 allows for selective pivotal adjustment of the seat back 14 relative to the seat cushion 12 between a generally upright plurality of seating positions and a folded flat position overlying the seat cushion 12. In the locked state, the recliner mechanism 16 prevents pivotal movement of the seat back 14 relative to the seat cushion 12. The recliner mechanism 16 is biased toward the locked state.

A control rod 19 is rotatably coupled to the recliner mechanism 16 for actuating the recliner mechanism 16 between the locked and unlocked states via corresponding rotation of the control rod 19 relative to the recliner mechanism 16.

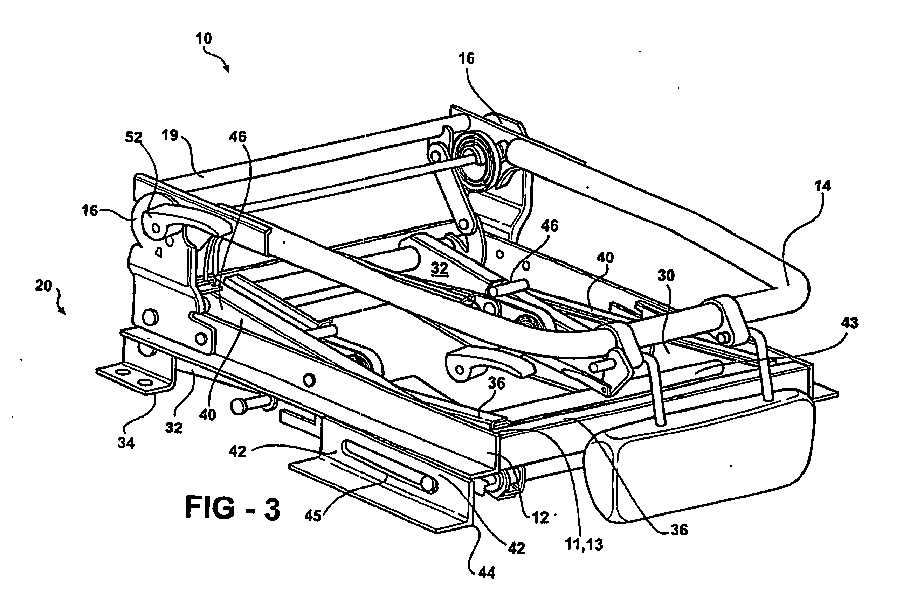

A riser mechanism 20 extends between the bottom surface 17 of the seat cushion 12 and the floor 5. The riser mechanism 20 allows selective movement of the seat assembly 10 between a seating position, as shown in Figure1, and a stowed position, as shown in Figure 3. In the seating position, the seat cushion 12 is spaced above the floor. In the stowed position, the seat cushion 12 is disposed within the recess 6 formed in the floor 5. The riser mechanism 20 includes a pair of generally parallel and spaced apart first links 30. Each of the first links 30 extends between a lower first end 32 and an upper first end 36. The lower first end 32 is pivotally coupled to a floor bracket 34 that is fixedly secured to the recess 6.

The upper end 36 is slidably coupled to a cushion bracket 38 that is fixedly secured to the bottom surface 17 of the seat cushion 12. More specifically, a slot 39 is formed in the cushion bracket 38 for slidably receiving a bolt or pin 37 extending from the upper first end 36 during movement of the seat assembly 10 between the seating and stowed positions.

The riser mechanism 20 also includes a pair of generally parallel and spaced apart second links 40. Each of the second links 40 extends between a lower second end 42 and an upper second end 46. The upper second end 46 of each second link 40 is fixedly secured to a rod 48 that is pivotally coupled to at least one of the side members 11,13 of the seat cushion 12. The lower second end 42 of each second link 40 is slidably engaged to a floor bracket 44 that is fixedly secured to the recess 6. More specifically, a bolt or pin 43 is fixedly secured to the lower second end 42 of each second link 40 and a slot 45 is formed in the floor bracket 44 for slidably receiving each of the pins 43 therein. The pins 43 slide within the slot 45 during movement of the seat assembly 10 between the seating and stowed positions. Each first link 30 is pivotally coupled to one of the respective second links 40 by a pivot pin 50 in a scissor- type configuration.

The seat assembly 10 includes a locking mechanism 51 for locking the seat assembly 10 in the seating position. The locking mechanism 51 includes a hook 60 that is engagable with the pin 37 when the seat assembly 10 is in the seating position to prevent sliding movement of the pin 37 within the slot 39 of the cushion bracket 38. The hook 60 is pivotally assembled to one of the side members 11, 13 of the seat cushion 12 for movement in and out of engagement with the pin 37.

A handle 52 is fixedly secured to the control rod 19 to facilitate actuation of the recliner mechanism 16. A dump handle 54 is pivotally coupled to the seat back 14 for actuating both the recliner mechanism 16 and for actuating the hook 60 in and out of engagement with the pin 37. More specifically, an L-shaped trigger lever 62 is pivotally coupled to the side member 11 of the seat cushion 12. The trigger lever 62 extends between first 61 and second 63 arms. A first cable 64 extends between the dump handle 54 and the first arm 61 of the trigger lever 62 for rotating the trigger lever 62 in response to rotation of the dump handle 54. A second cable 66 extends between the hook 60 and a second arm 63 of the trigger lever 62 for moving rotating the hook 60 in response to corresponding rotation of the trigger lever 62. By this arrangement, rotation of the dump handle 54 moves the hook 60 in and out of engagement with the pin 37. Additionally, a rod 68 extends between the second arm 63 of the trigger lever 62 and a lever arm 19a that extends radially from the control rod 19, so that actuation of the dump handle 54 moves the recliner mechanism 16 between the locked and unlocked states while also moving the hook 60 in and out of engagement with the pin 37, respectively, via the trigger lever 62 and the first and second cables 64,66.

A panel 70 is operatively coupled to the riser mechanism 20 for movement with the seat assembly 10 between the seating and stowed positions. In the seating position, the panel 70 conceals the recess 6 in the floor 5 and is positioned such that it appears to be a part of the load floor 7. It should be appreciated by those skilled in the art that the panel 70 can be positioned otherwise and still cover the recess 6. In the stowed position, the panel 70 is disposed within the recess 6 with the seat assembly 10. More specifically, a pair of panel brackets 72,74 are each assembled to each of the first 30 and second 40 links. The panel brackets 72,74 are spaced apart and adapted to fixedly support the panel 70 therebetween. A pair of upper front arms 76 each extends between a link end 76a pivotally coupled to the upper first end 36 of each first link 30 and a bracket end 76b slidably engaged with each panel bracket 72,74. A pin 78 is fixedly secured to the bracket end 76b of each upper front arm 76 and projects through a slot 73,75 formed in each panel bracket 72,74, which defines the sliding engagement of each front arm 76 with each panel bracket 72,74. A pair of lower front arms 80 each extends between a link end 80a pivotally coupled to the lower end 42 of each second link 40 and a bracket end 80b pivotally coupled to the pin 78 for sliding engagement with the slot 73,75 in each panel bracket 72,74. Similarly, a pair of upper rear arm 82 each extends between a link end 82a pivotally coupled to the upper end 46 of each second link 40 and a bracket end 82b pivotally coupled to each panel bracket 72,74 by a pivot pin 86. A pair of lower rear arms 84 each extends between a link end 84a pivotally coupled to the lower end 32 of each first link 30 and a bracket end 84b pivotally coupled to each panel bracket 72,74 by the pivot pin 86. By this arrangement, the panel 70 moves with the seat assembly 10 between the seating and stowed positions, during which the fore and aft movement of the upper and lower front arms 76,80 is lost by sliding movement of the pin 78 within the slot 73,75 in each respective panel bracket 72,74.

In operation, the seat back 14 can be adjusted among the plurality of reclined seating positions by unlocking the recliner mechanism 16 via the handle 52. Releasing the handle 52 allows the recliner mechanism 16 to return to the locked state to lock the seat back 14 in the chosen one of the plurality of reclined seating positions.

The seat assembly 10 can be moved from the seating position to the stowed position by actuating the dump handle 54. Actuation of the dump handle 54 disengages the hook 60 from the pin 37 via the first 64 and second 66 cables and the trigger lever 62. The actuation of the dump handle 54 also unlocks the recliner mechanism 16 via the rod 68 that extends between the trigger lever 62 and the control rod 19. With the recliner mechanism 16 unlocked, the seat back 14 can be moved among the plurality of reclined seating positions and the forwardly stowed position. With the hook 60 disengaged from the pin 37, the seat assembly 10 can be moved between the seating and stowed positions, during which each pin 37,43 slide within the slot 39,45 of each panel bracket 38,44 to allow the first 30 and second 40 links to collapse in a scissor-like action. As the seat assembly 10 is moved between the seating and stowed positions, the rod 48 pivotally coupled between the side members 11, 13 of the seat cushion 12 synchronizes the movement of the second links 40.

The seat assembly 10 includes a first panel 90 fixedly secured to the seat back 14, which serves as part of the load floor 7 when the seat back 14 is in the forwardly stowed position. A second panel 92 is pivotally coupled to the first panel 90 to swing over and bridge a space between the seat assembly 10 in the stowed position and the load floor 7 behind the seat assembly 10, or alternatively, a load floor 7 on a seat back of another seat assembly that is located behind the seat assembly 10. A latch hook 94 is pivotally coupled to the seat back 14 for movement in and out of a slot 96 formed in the first panel 90. The latch hook 94 extends through the slot 96 and hookingly engages the second panel 92. The latch hook 94 retains the second panel 92 against the first panel 90 during use of the seat assembly 10 in the seating position.

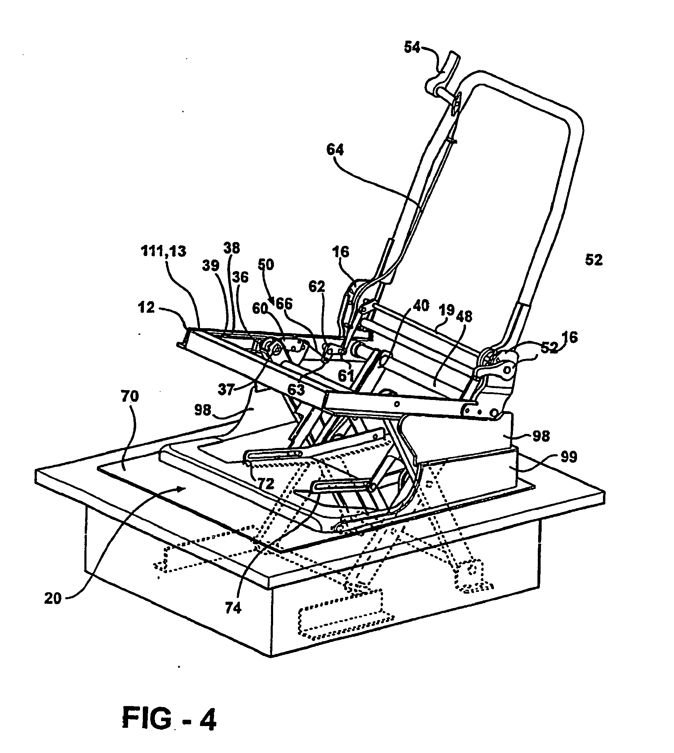

Referring to Figure 4, the seat assembly 10 includes a pair of link covers 98 each fixedly secured to opposite sides of the seat cushion 12 for concealing the riser mechanism 20. A pair of upstanding wall 99 each extends vertically from opposite ends of the panel 70 to overlap each of the link covers 98. During movement of the seat assembly 10 between the seating and stowed positions, the link covers 98 and the upstanding walls 99 remain overlapped to conceal the riser mechanism 20.

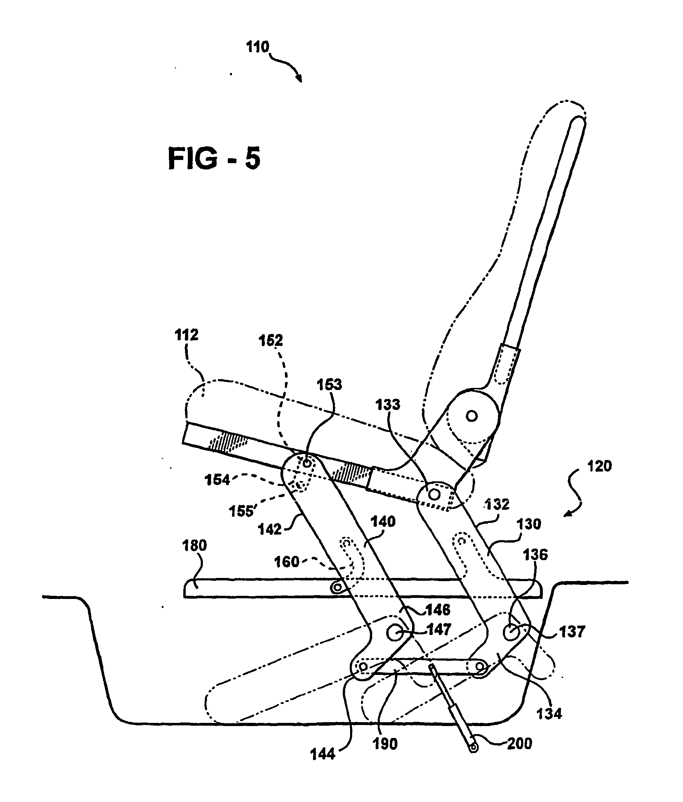

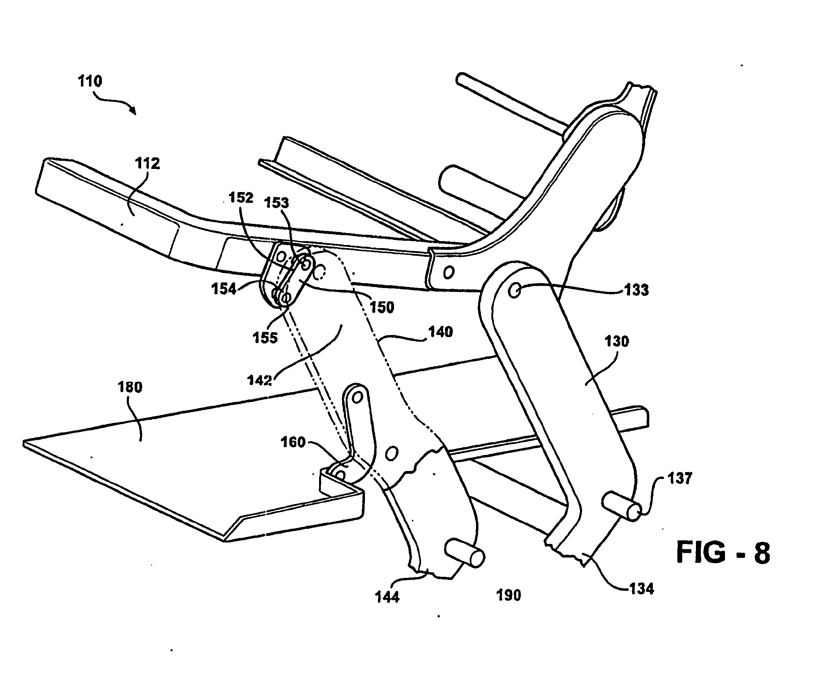

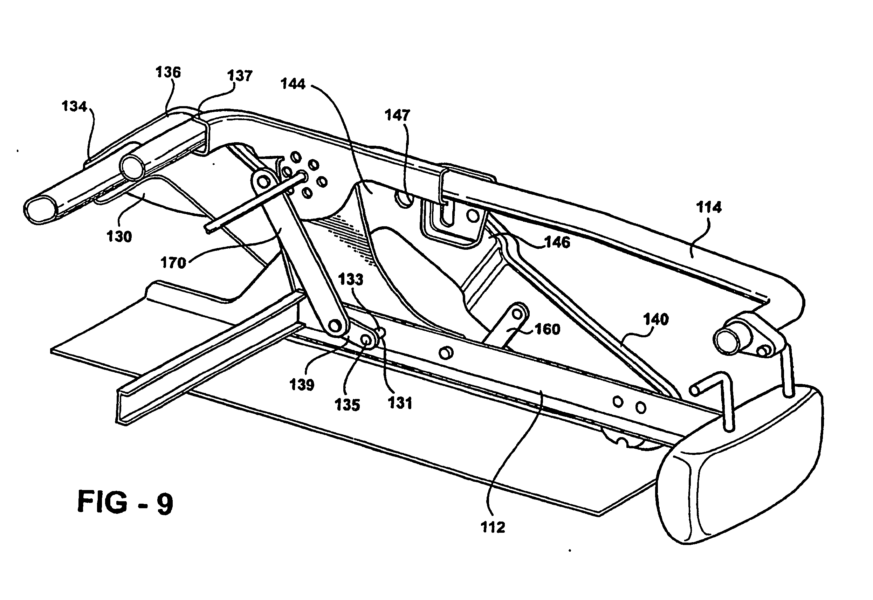

In Figures 5 through 9, a second seat assembly is generally indicated at 110, wherein elements of the alternative embodiment similar to those in the first embodiment are indicated by reference characters that are offset by 100. A riser mechanism in the form of a four-bar linkage 120 extends between the bottom surface 117 of the seat cushion 112 and the floor 5. The linkage 120 allows selective movement of the seat assembly 110 between a seating position, as shown in Figure 8, and a stowed position, as shown in Figure 9. The linkage 120 includes an L-shaped pair of rear links 130 each having an upper arm 132, a lower arm 134 and an intermediate portion 136 extending therebetween.

A pivot pin 133 extends between a proximal end 131 fixedly secured to the upper arm 132 and a distal end 135. The pivot pin 133 is pivotally coupled to the seat cushion 112. The intermediate portion 136 is pivotally coupled to the floor 5 by a pivot pin 137.

The linkage 120 also includes an L-shaped pair of front links 140 each having an upper arm 142, a lower arm 144 and an intermediate portion 146 extending therebetween. A pair of arms 150 each extends between a link end 152 pivotally coupled to the upper arm 142 of the front link 140 by a pivot pin 153 and a cushion end 154 pivotally coupled to the seat cushion 112 by a pivot pin 155. The intermediate portion 146 of the front links 140 is pivotally coupled to the floor 5 by a pivot pin 147.

During movement of the seat assembly 110 between the seating and stowed positions, the rear links 130 pivot relative to the vehicle floor 5 about the pivot pin 137, while the front links 140 pivot relative to the floor about pivot pin 147. Additionally, during movement of the seat assembly 110 between the seating and stowed positions, the rear links 130 pivot relative to the seat cushion 112 about the pivot pins 133, while the front links 140 pivot relative to the arms 150 about the pivot pins 153 and the arms 150 pivot relative to the seat cushion 112 about the pivot pins 155. The arms 150 allow the seat cushion 112 to be angularly tilted while in the seating position relative to stowed position.

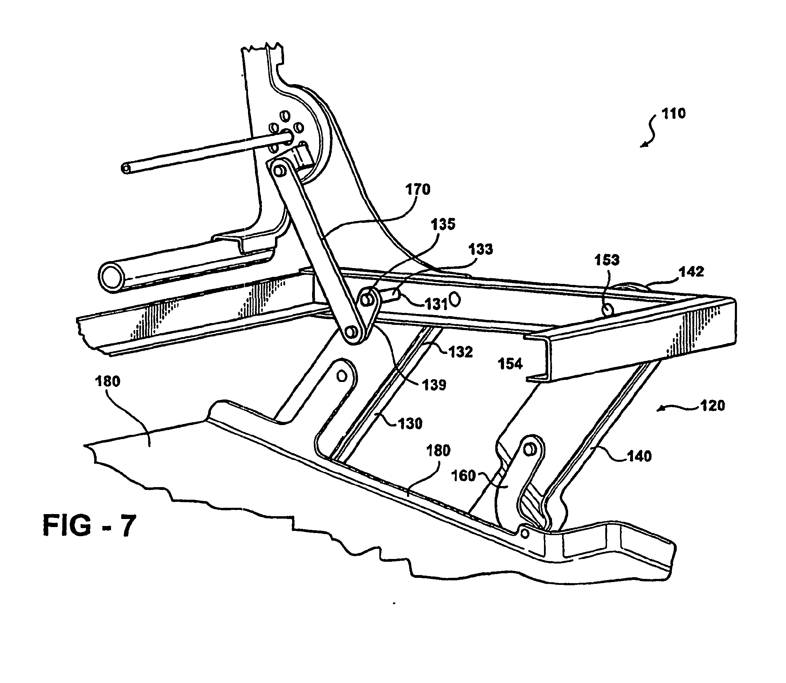

Referring to Figure 7, a radial arm 139 is fixedly secured to and extends radially outwardly from the distal end 135. A link 170 extends between one end pivotally coupled to a portion of the seat back 114 and an opposite end pivotally coupled to the distal end of the radial arm 139. During pivotal movement of the seat back 114 between the seating and stowed positions, the link 170 causes the pivot pin 133 to rotate, which, in turn, urges pivotal movement of the rear link 130 about the longitudinal axis of the pivot pins 133. The seat assembly 110 can be moved between the seating position with the seat cushion 112 spaced above the vehicle floor 5 and stowed position with the seat cushion 112 lying longitudinally flat inside the recess 6 in response to movement of the seat back between the respective seating and stowed positions.

A panel 180 extends between the front 140 and rear 130 links. An L-shaped support arm 160 extends between each front link 140 and the front end of the panel180. One end of the arm 160 is pivotally coupled to the respective front link 140 and the opposite end of the arm 160 is pivotally coupled to the front end of the panel 180. The rear end of the panel 180 is pivotally coupled to the rear links 130. During movement of the seat assembly 110 between the seating and stowed positions, the panel 180 moves with the seat assembly 110 between the seating position, wherein the panel 180 is flush with the load floor 7, and the stowed position, wherein the panel 180 is disposed within the recess 6 in the floor 5.

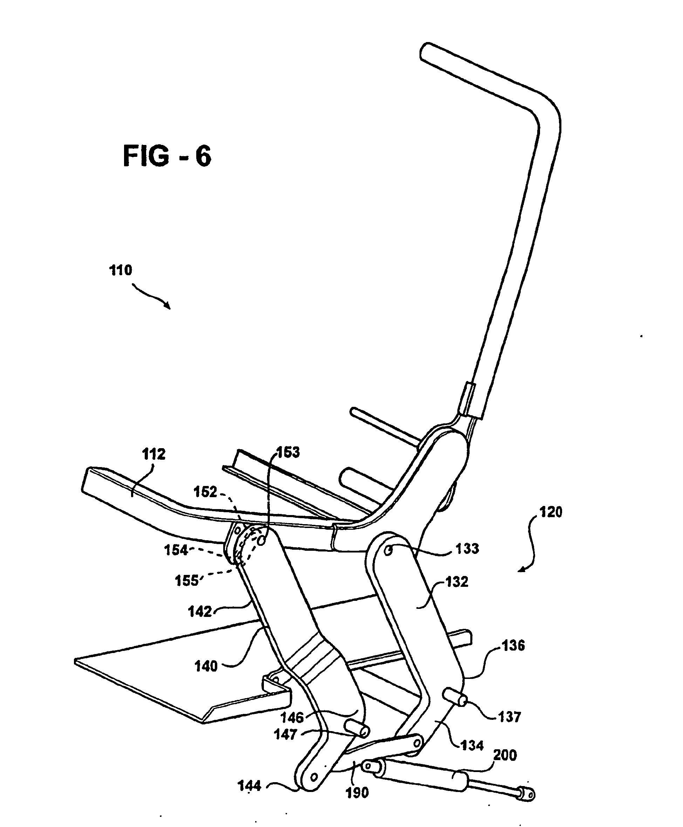

Referring to Figure 6, a link 190 extends between the lower arms 134,144 of the front 130 and rear 140 links. A pneumatic plunger-type dampener 200 extends between the floor 5 and the link 190 for dampening the movement of the seat assembly 110 between the seating and stowed positions. Alternatively, the dampener 200 can extends between the floor 5 and the lower arm 134,144 of one of the front 130 and rear 140 links.

The invention has been described in an illustrative manner, and it is to be understood that the terminology, which has been used, is intended to be in the nature of words of description rather than of limitation.

Many modification and variations of the present invention are possible in light of the above teachings. It is, therefore, to be understood that within the scope of the appended claims, the invention can be practiced other than as specifically described.

## Claims

1. A seat assembly (10) for supporting an occupant above a floor (5) having a load floor (7) and a recess (6) extending therebelow, said seat assembly comprising:
a seat cushion (12) extending between a seating surface (15) and a bottom surface (17);
a riser mechanism (20) extending between said bottom surface (17) of said seat cushion (12) and the floor (5) for allowing selective movement of said seat assembly (10) between a seating position to support the occupant above the load floor (7) and a stowed position disposed within the recess (6) in the floor (5), said riser mechanism (20) including a first link (30) extending between an upper first end (36) slidably coupled to said seat cushion (12) and a lower first end (32) pivotally coupled to the floor (5) and a second link (40) extending between an upper second end (46) pivotally coupled to said seat cushion (12) and a lower second end (42) slidably coupled to the floor (5); and
a panel (70) operatively coupled to said riser mechanism (20) for movement with said riser mechanism (20) between said seating position, wherein said panel (70) conceals the recess (6) in the floor (5), and said stowed position, wherein said panel (70) is disposed within the recess (6) providing access thereto to allow said seat assembly (10) to be stowed in recess (6).

2. A seat assembly as set forth in claim 1 including a pivot pin (50) pivotally coupling said first and second links (30, 40) to each other.

3. A seat assembly as set forth in claim 2 including a panel bracket (72, 74) coupling said panel (70) to at least one of said first and second links (30, 40) such that said panel (70) moves with said seat assembly (10) between said seating and stowed positions.

4. A seat assembly as set forth in claim 3 including an upper forward arm (76) extending between a link end (76a) pivotally coupled to an upper end (36) of said first link (30) and a bracket end (76b), and a lower forward arm (80) extending between a link end (80a) pivotally coupled to a lower end (42) of said second link (40) and a bracket end (80b), and both said bracket ends (76b, 80b) together are slidably coupled to said panel bracket (72, 74) for supporting said panel (70) during movement between said seating and stowed positions.

5. A seat assembly as set forth in claim 4 including an upper rearward arm (82) extending between a link end (82a) pivotally coupled to an upper end (46) of said second link (40) and a bracket end (82b), and a lower rearward arm (84) extending between a link end (84a) pivotally coupled to a lower end (32) of said first link (30) and a bracket end (84b), and both said bracket ends (82b, 84b) together are pivotally coupled to said panel bracket (72, 74) for supporting said panel (70) during movement between said seating and stowed positions.

6. A seat assembly as set forth in claim 5 including a locking mechanism (51) for selectively locking said seat assembly (10) in said seating position, said locking mechanism (51) including a lock pin (37) fixedly secured to one of said first and second links (30, 40), and a hook (60) lockingly engagable with said pin (37) for maintaining said seat assembly (10) in said seating position, said hook (60) pivotally coupled to said seat cushion for selective movement in and out of said locking engagement with said pin.

7. A seat assembly as set forth in claim 6 including a cushion bracket (38) fixedly secured to said seat cushion, said cushion bracket including a slot (39) formed therein for slidably receiving said lock pin (37) therethrough during movement of said seat assembly (10) between said seating and stowed positions.

8. A seat assembly as set forth in claim 7 wherein said lock pin (37) is fixedly secured to one of said upper first and second ends (36, 46) of one of said first and second links (30, 40) and protrudes through said slot (39) in said cushion bracket (38) to define sliding engagement between said upper end of said first link (30) and said seat cushion (12).

## Patentansprüche

1. Sitzanordnung (10) zum Tragen eines Insassen oberhalb eines Bodens (5), der eine Ladefläche (7) und eine sich darunter erstreckende Ausnehmung (6) aufweist, wobei die Sitzanordnung umfasst:
einen Sitzpolster (12), das sich zwischen einer Sitzfläche (15) und einer unteren Fläche (17) erstreckt,
einen Hebemechanismus (20), der sich zwischen der unteren Fläche des Sitzpolsters (12) und dem Boden (5) erstreckt und der eine wahlweise Bewegung der Sitzanordnung (10) zwischen einer Sitzposition, in der der Insasse oberhalb der Ladefläche (7) getragen wird, und einer Stauposition, die innerhalb der Ausnehmung (6) im Boden (5) angeordnet ist, ermöglicht, wobei der Hebemechanismus (20) ein erstes Bindeglied bzw. eine erste Verbindung (30) aufweist, die sich zwischen einem oberen ersten Ende (36), das gleitend bzw. verschiebbar mit dem Sitzpolster (12) verbunden ist, und einem unteren ersten Ende (32), das schwenkbar mit dem Boden (5) verbunden ist, erstreckt, und der weiterhin ein zweites Bindeglied bzw. eine zweite Verbindung (40) aufweist, die sich zwischen einem oberen zweiten Ende (46), das schwenkbar mit dem Sitzpolster (12) verbunden ist, und einem unteren zweiten Ende (42), das gleitend bzw. verschiebbar mit dem Boden (5) verbunden ist, erstreckt, und
ein Panel bzw. eine Fußbodenplatte (70), die mit dem Hebemechanismus (20) in Wirkverbindung steht, um sich zusammen mit dem Hebemechanismus (20) zwischen der Sitzposition, in der die Fußbodenplatte (70) die Ausnehmung (6) im Boden (5) verdeckt, und der Stauposition zu bewegen, in der die Fußbodenplatte (70) innerhalb der Ausnehmung (6) angeordnet ist, zu der ein Zugang geschaffen wird, um die Sitzanordnung (10) in der Ausnehmung (6) verstauen zu können.

2. Sitzanordnung nach Anspruch 1 mit einem Schwenkstift (50), der die erste und die zweite Verbindung (30, 40) miteinander in schwenkender Weise verbindet.

3. Sitzanordnung nach Anspruch 2 mit einem Haltebügel (72, 74) für die Fußbodenplatte, der die Fußbodenplatte (70) mit der ersten und/oder zweiten Verbindung (30, 40) derart koppelt, dass die Fußbodenplatte (70) zusammen mit der Sitzanordnung (10) sich zwischen der Sitzposition und der Stauposition bewegt.

4. Sitzanordnung nach Anspruch 3, mit einem oberen vorderen Arm (76), der sich zwischen einem Verbindungsende (76a), das schwenkbar mit einem oberen Ende (36) der ersten Verbindung (30) verbunden ist, und einem Haltebügelende (76b) erstreckt, und mit einem unteren vorderen Arm (80), der sich zwischen einem Verbindungsende (80a), das mit einem unteren Ende (42) der zweiten Verbindung (40) schwenkbar verbunden ist, und einen Haltebügelende (80b) erstreckt, wobei beide Haltebügelenden (76b, 89b) gemeinsam gleitend bzw. verschiebbar mit dem Haltebügel (42, 74) für die Fußbodenplatte verbunden sind, um die Fußbodenplatte (70) während einer Bewegung zwischen der Sitzposition und der Stauposition zu unterstützen.

5. Sitzanordnung nach Anspruch 4 mit einem oberen hinteren Arm (82), der sich zwischen einem Verbindungsende (82a), das schwenkbar mit einem oberen Ende (46) der zweiten Verbindung (40) verbunden ist, und einem Haltebügelende (82b) erstreckt, und mit einem unteren hinteren Arm (84), der sich zwischen einem Verbindungsende (84a), das schwenkbar mit einem unteren Ende (32) der ersten Verbindung (30) verbunden ist, und einem Haltebügelende (84b) erstreckt, wobei beide Haltebügelenden (82b, 84b) gemeinsam schwenkbar mit dem Haltebügel (72, 74) für die Fußbodenplatte verbunden sind, um die Fußbodenplatte (70) während einer Bewegung zwischen der Sitzposition und der Stauposition zu unterstützen.

6. Sitzanordnung nach Anspruch 5 mit einem Feststell- bzw. Sperrmechanismus (51) zum wahlweisen Feststellen der Sitzanordnung (10) in der Sitzposition, wobei der Feststellmechanismus (51) einen Feststellstift (37) aufweist, der fest an der ersten oder an der zweiten Verbindung (30, 40) befestigt ist, und einen Haken (60) aufweist, der zum Feststellen mit dem Stift (37) in Eingriff zu bringen ist, um die Sitzanordnung (10) in der Sitzposition zu halten, wobei der Haken (60) zur wahlweisen Bewegung in und aus dem feststellenden Eingriff mit dem Stift hinein- bzw. hinausschwenkbar mit dem Sitzpolster verbunden ist.

7. Sitzanordnung nach Anspruch 6 mit einem Polster-Haltebügel (38), der fest an das Sitzpolster befestigt ist, wobei der Polster-Haltebügel einen darin ausgebildeten Schlitz (39) aufweist, um den Feststellstift (37) durch den Schlitz hindurch während einer Bewegung der Sitzanordnung (10) zwischen der Sitzposition und der Stauposition in verschiebbarer Weise aufzunehmen.

8. Sitzanordnung nach Anspruch 7, bei der der Feststellstift (37) fest an das obere erste oder das obere zweite Ende (36, 46) der ersten oder der zweiten Verbindung (30, 40) befestigt ist und durch den Schlitz (39) in den Polster-Haltebügel (38) ragt, um ein verschiebbares Zusammenwirken zwischen dem oberen Ende der ersten Verbindung (30) und dem Sitzpolster (12) zu ermöglichen.

## Revendications

1. Ensemble formant siège (10) pour supporter un occupant au-dessus d'un plancher (5) ayant un plancher de charge (7) et un évidement (6) s'étendant en-dessous de celui-ci, ledit ensemble formant siège comportant :
un coussin de siège (12) s'étendant entre une surface d'assise (15) et une surface inférieure (17) ;
un mécanisme d'élévation (20) s'étendant entre ladite surface inférieure (17) dudit coussin de siège (12) et le plancher (5) afin de permettre un déplacement sélectif dudit ensemble formant siège (10) entre une position d'assise pour supporter l'occupant au-dessus du plancher de charge (7) et une position rangée disposée dans l'évidement (6) dans le plancher (5), ledit mécanisme d'élévation (20) comportant une première biellette (30) s'étendant entre une première extrémité supérieure (36) couplée de manière coulissante audit coussin de siège (12) et une première extrémité inférieure (32) couplée de manière pivotante au plancher (5), et une seconde biellette (40) s'étendant entre une seconde extrémité supérieure (46) couplée de manière pivotante audit coussin de siège (12) et une seconde extrémité inférieure (42) couplée de manière coulissante au plancher (5) ; et
un panneau (70) couplé de manière opérationnelle audit mécanisme d'élévation (20) pour un déplacement avec ledit mécanisme d'élévation (20) entre ladite position d'assise, dans laquelle ledit panneau (70) masque l'évidement (6) dans le plancher (5), et ladite position rangée, dans laquelle ledit panneau (70) est disposé dans l'évidement (6) en fournissant un accès à celui-ci pour permettre audit ensemble formant siège (10) d'être rangé dans l'évidement (6).

2. Ensemble formant siège selon la revendication 1, comportant une broche de pivotement (50) couplant de manière pivotante lesdites première et seconde biellettes (30, 40) l'une avec l'autre.

3. Ensemble formant siège selon la revendication 2, comportant un étrier de panneau (72, 74) couplant ledit panneau (70) à au moins une desdites première et seconde biellettes (30, 40), de sorte que ledit panneau (70) se déplace avec ledit ensemble formant siège (10) entre lesdites positions d'assise et rangée.

4. Ensemble formant siège selon la revendication 3, comportant un bras avant supérieur (76) s'étendant entre une extrémité de biellette (76a) couplée de manière pivotante à une extrémité supérieure (36) de ladite première biellette (30) et une extrémité d'étrier (76b), et un bras avant inférieur (80) s'étendant entre une extrémité de biellette (80a) couplée de manière pivotante à une extrémité inférieure (42) de ladite seconde biellette (40) et une extrémité d'étrier (80b), et lesdites deux extrémités d'étrier (76b, 80b) sont couplées ensemble de manière coulissante audit étrier de panneau (72, 74) pour supporter ledit panneau (70) pendant un déplacement entre lesdites positions d'assise et rangée.

5. Ensemble formant siège selon la revendication 4, comportant un bras arrière supérieur (82) s'étendant entre une extrémité de biellette (82a) couplée de manière pivotante à une extrémité supérieure (46) de ladite seconde biellette (40) et une extrémité d'étrier (82b), et un bras arrière inférieur (84) s'étendant entre une extrémité de biellette (84a) couplée de manière pivotante à une extrémité inférieure (32) de ladite première biellette (30) et une extrémité d'étrier (84b), et lesdites extrémités d'étrier (82b, 84b) sont couplées ensemble de manière pivotante audit étrier de panneau (72, 74) pour supporter ledit panneau (70) pendant un déplacement entre lesdites positions d'assise et rangée.

6. Ensemble formant siège selon la revendication 5, comportant un mécanisme de verrouillage (51) pour verrouiller de manière sélective ledit ensemble formant siège (10) dans ladite position d'assise, ledit mécanisme de verrouillage (51) comportant une broche de verrouillage (37) fixée de manière fixe sur une desdites première et seconde biellettes (30, 40), et un crochet (60) pouvant venir en prise de manière verrouillée avec ladite broche (37) pour maintenir ledit ensemble formant siège (10) dans ladite position d'assise, ledit crochet (60) étant couplé de manière pivotante audit coussin de siège pour un déplacement sélectif en prise de verrouillage avec ladite broche, et hors de ladite prise de verrouillage.

7. Ensemble formant siège selon la revendication 6, comportant un étrier de coussin (38) fixé de manière fixe sur ledit coussin de siège, ledit étrier de coussin comportant une fente (39) formée dans celui-ci pour recevoir de manière coulissante ladite broche de verrouillage (37) à travers celle-ci pendant un déplacement dudit ensemble formant siège (10) entre lesdites positions d'assise et rangée.

8. Ensemble formant siège selon la revendication 7, dans lequel ladite broche de verrouillage (37) est fixée de manière fixe sur une desdites première et seconde extrémités (36, 46) d'une desdites première et seconde biellettes (30, 40), et fait saillie à travers ladite fente (39) dans ledit étrier de coussin (38) pour définir une mise en prise coulissante entre ladite extrémité supérieure de ladite première biellette (30) et ledit coussin de siège (12).
